# EUROPEAN PATENT SPECIFICATION

(11) **EP 4 071 039 B1**
(45) Date of publication and mention of the grant of the patent: **03.07.2024**
(21) Application number: 22164997.3
(22) Date of filing: 29.03.2022
(51) Int. Cl.: B62K 25/02, F16C 23/10, B60B 27/02, F16H 19/04, F16C 19/06

(54) **ECCENTRIC WHEEL ADJUSTMENT DEVICE**
EXZENTERRAD-EINSTELLVORRICHTUNG
DISPOSITIF DE RÉGLAGE DE ROUE EXCENTRIQUE

(30) Priority: 09.04.2021 TW 110112904
(43) Date of publication of application: 12.10.2022
(73) Proprietor: Enermax, Technology Corporation, Taoyuan City 330 (TW)
(72) Inventor: SU, Yen-Wen, 330 Taoyuan City (TW)
(74) Representative: 2K Patentanwälte Blasberg Kewitz & Reichel

(56) References cited:
- CN-U- 201 777 077
- US-A1- 2005 098 973
- US-B1- 6 371 571

## Description

### BACKGROUND

### Technical Field

The invention relates to a wheel hub, particularly to an eccentric wheel adjustment device of a scooter.

### Related Art

With the rise of life quality, people pay more attention to outdoor fitness and other activities, for example riding a vehicle such as a bicycle or a scooter. To improve the exercise effect or increase the fun of riding, designing a wheel hub in an eccentric manner may generate up and down effects in riding and increase the exercise effect for a rider's feet.

However, although the above-mentioned wheel axle also has a design that allows users to adjust the eccentricity, it is often difficult to adjust the components due to the need to disassemble the components. Also, the detachable design is easy to cause separation of component, which may affect users' safety considerations in riding.

Each of the documents CN 201 777 077 U, US 6 371 571 81 discloses an eccentric wheel adjustment device falling within the wording of the pre-characterizing portion of claim 1.

In view of this, the inventors have devoted themselves to the above-mentioned related art, researched intensively and cooperated with the application of science to try to solve the above-mentioned problems. Finally, the invention which is reasonable and effective to overcome the above drawbacks is provided.

### SUMMARY

A primary object of the invention is to provide an eccentric wheel adjustment device, which is unnecessary to detach any related components to allow a user to adjust rapidly, conveniently, and easily.

Another object of the invention is to provide an eccentric wheel adjustment device, which may achieve the object of rapidly adjusting desired eccentricity by using a brake disk of a vehicle such as a bicycle or a scooter.

To accomplish the above object, the invention provides an eccentric wheel adjustment device, which includes a hub, an adjustment disk, and a release structure. The hub has an axle portion eccentrically arranged and an inner ring portion formed around the axle portion. The adjustment disk has a disk seat for the hub being pivotally disposed thereon and a positioning member for positioning the hub on the disk seat. The positioning member has an outer ring portion for aligning the inner ring portion of the hub in the outer ring portion. The release structure includes a limiting block and a switch member driving the limiting block to act so as to drive the limiting block to straddle between the hub and the adjustment disk or to move back to the inner ring portion. This accomplishes the object of limiting or releasing the limiting block for eccentric adjustment.

### BRIEF DESCRIPTION OF THE DRAWINGS

FIG 1 is an exploded view of the first embodiment of the invention;
FIG 2 is an assembled view of the first embodiment of the invention;
FIG 3 is an exploded view of the hub and the release structure of the first embodiment of the invention;
FIG 4 is a cross-sectional view of the first embodiment of the invention;
FIG 5 is a cross-sectional view along line 5-5 in FIG 4;
FIG 6 is a cross-sectional view along line 6-6 in FIG 4;
FIGS. 7 and 8 are two schematic views of the relative rotation of the hub and the adjustment disk according to FIG 6;
FIG 9 is a schematic view of the release structure in a limiting status according to FIG 5;
FIG 10 is a schematic view of the release structure in a limiting status of the second embodiment of the invention;
FIG 11 is a schematic view of the release structure in a releasing status of the second embodiment of the invention;
FIG 12 is a block diagram of motor control of the second embodiment of the invention;
FIG 13 is a schematic view of the release structure in a releasing status of the third embodiment of the invention;
FIG 14 is a schematic view of the release structure in a limiting status of the third embodiment of the invention; and
FIG 15 is a partially schematic view of the limiting block and the switch member of the third embodiment of the invention.

### DETAILED DESCRIPTION

The technical contents of this invention will become apparent with the detailed description of embodiments accompanied with the illustration of related drawings as follows. It is intended that the embodiments and drawings disclosed herein are to be considered illustrative rather than restrictive.

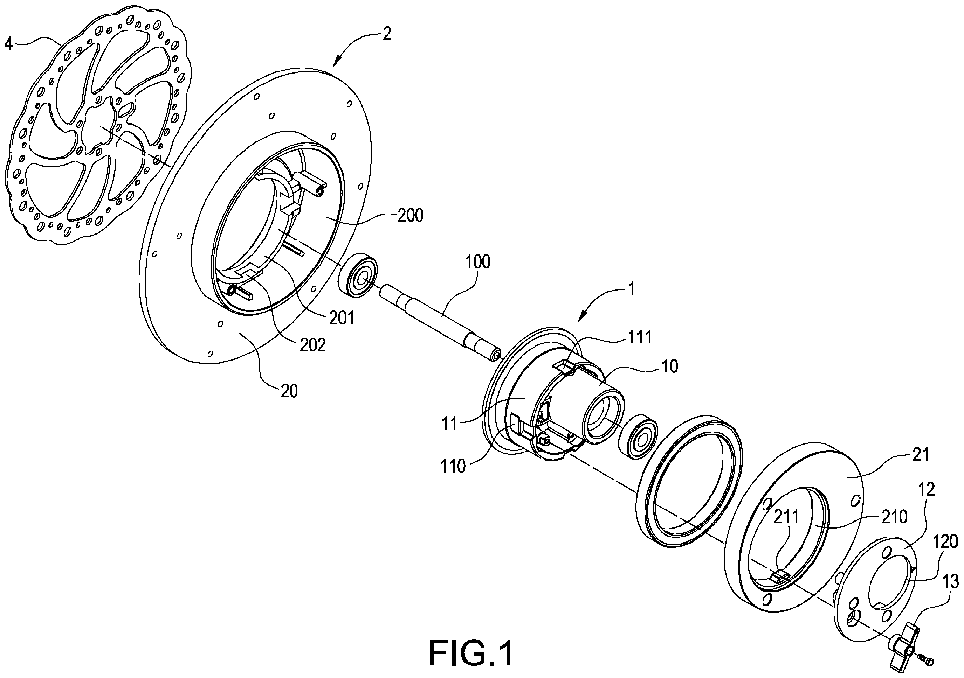

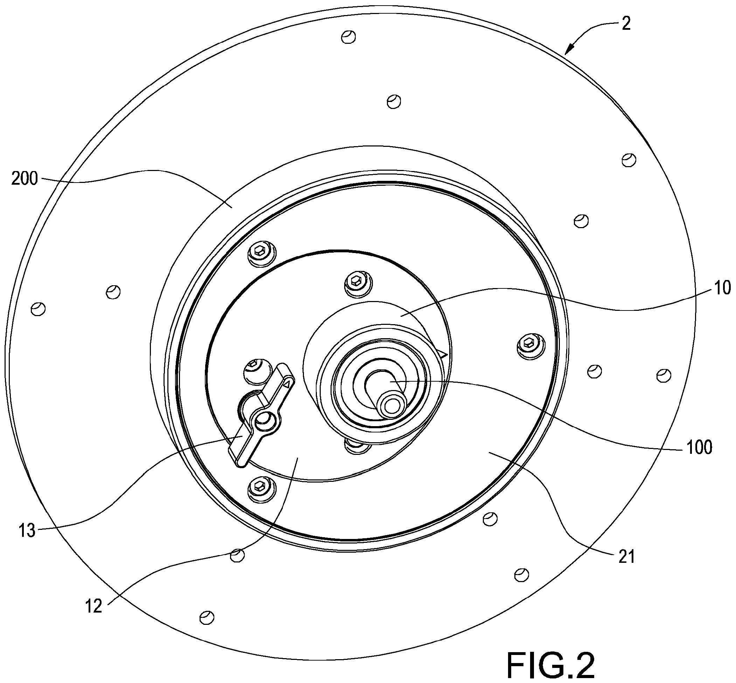

Please refer to FIGS. 1 and 2, which are an exploded view and an assembled view of the first embodiment of the invention. The invention provides an eccentric wheel adjustment device, which is used to associate with a brake disk of a vehicle such as a bicycle or a scooter and includes a hub 1, an adjustment disk 2 and a release structure 3 serving as a clutch between the hub 1 and the adjustment disk 2.

The hub 1 has an axle portion 10 which is eccentrically arranged. The axle portion 10 is used for a vehicle's axle or being disposed with an axle 100 to be pivotally disposed to a vehicle. The hub 1 is further disposed with an inner ring portion 11 formed around the axle portion 10. The inner ring portion 11 is formed with an opening 110 and multiple positioning recesses 111 which are annularly arranged at intervals. The opening 110 and each positioning recess 111 may be offset along an axial direction of the inner ring portion 111.

The adjustment disk 2 is assembled with the brake disk 4 of the vehicle and may be controlled by the brake disk 4 so as to lock the adjustment disk 2 to make it unable to rotate to achieve the object of braking. The adjustment disk 2 has a disk seat 20 for the hub 1 being pivotally disposed thereon and a positioning member 21 for positioning the hub 1 on the disk seat 20. The disk seat 20 is disposed with a receiving portion 200 for pivotally receiving the hub 1. An eccentric ring 201 is provided in the receiving portion 200. The eccentric ring 201 is provided with multiple limiting holes 202 which are annularly arranged at intervals and corresponding to the opening 110 of the hub 1. The positioning member 21 has an outer ring portion 210 for aligning the inner ring portion 11 of the hub 1 in the outer ring portion 210. The outer ring portion 210 is disposed with multiple positioning protrusions 211 which are annularly arranged at intervals and separately corresponding to the positioning recesses 111. In addition, because the hub 1 is fixed in the receiving portion 200 and rotates against the hub 1 through the disk seat 20, the hub 1 may change the position of the axle portion 10 or the axle 100 to achieve the object of adjusting the eccentricity.

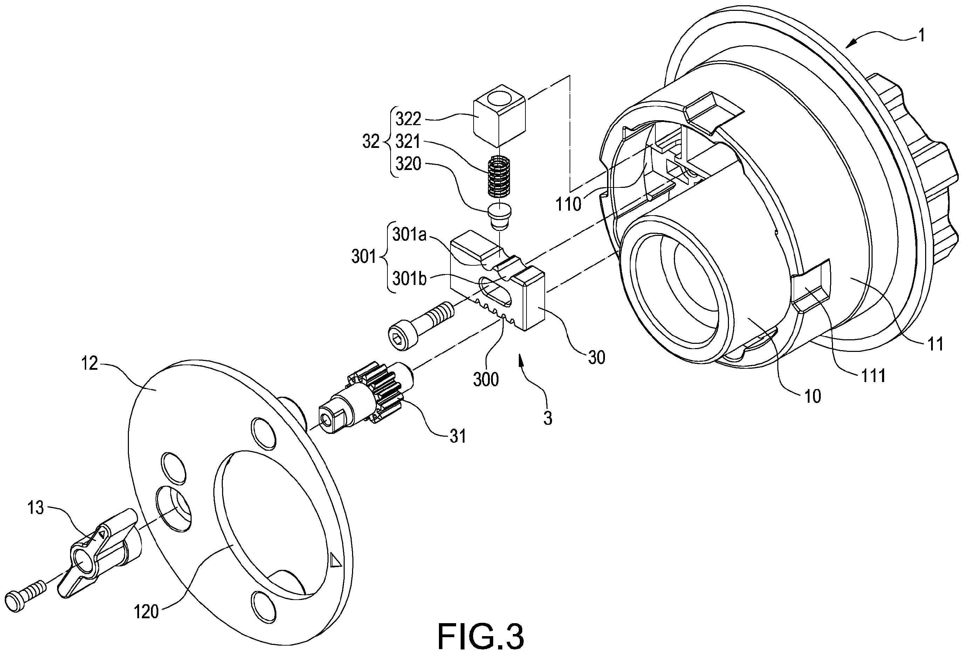

Please refer to FIG 3. The release structure 3 may be disposed on the hub 1 or the adjustment disk 2 for limiting the relative rotation of the hub 1 and the dick seat 20, and the eccentricity may be adjusted after releasing the limiting. The release structure 3 is disposed on the hub 1 and includes a limiting block 30 and a switch member 31 driving the limiting block 30 to limit or release. The limiting block 30 may be disposed in the inner ring portion 11 to shift toward the opening 110 and pass the opening 110 to straddle between the inner ring portion 11 and the receiving portion 200 by the driving of the switch member 31, so as to limit the hub 1 and the disk seat 20 to generate relative rotation, or recede from the opening 110 to locate in the inner ring portion 11 to release the abovementioned limiting to make the hub 1 and the disk seat 20 relatively rotate. In detail, a side of the limiting block 30 is disposed with a teeth portion 300 extended toward the opening 110. The switch member 31 may have a gear, and a wrench knob 13 may be used to wrench the gear of the switch member 31 to rotate to drive the limiting block 30 to do the abovementioned shift to achieve the object of limiting or releasing.

In one embodiment of the invention, the release structure 3 may be further disposed with a stage assembly 32. The stage assembly 32 may be composed of a protrusive piece 320, an elastic element 321 abutting against the protrusive piece 320 and a receiving piece 322 accommodating the protrusive piece 320 and the elastic element 321. Another side of the limiting block 30 is disposed with a two-stage structure 301. The two-stage structure 301 includes a first stage 301a and a second stage 301b for separately corresponding to the limiting status and the releasing status so as to provide user a sensation that the limiting block 30 is shifted to the predetermined position when the switch member 31 is wrenched.

In addition, the inner ring portion 11 of the hub 1 may also be provided with a cover plate 12 for fixing the release structure 3 in the inner ring portion 11. The cover plate 12 is provided with a pivot hole 120 corresponding to the axle portion 10 or being passed through by the axle 100 to be advantageous to pivot with a vehicle.

Therefore, the eccentric wheel adjustment device of the invention may be obtained by the above structure.

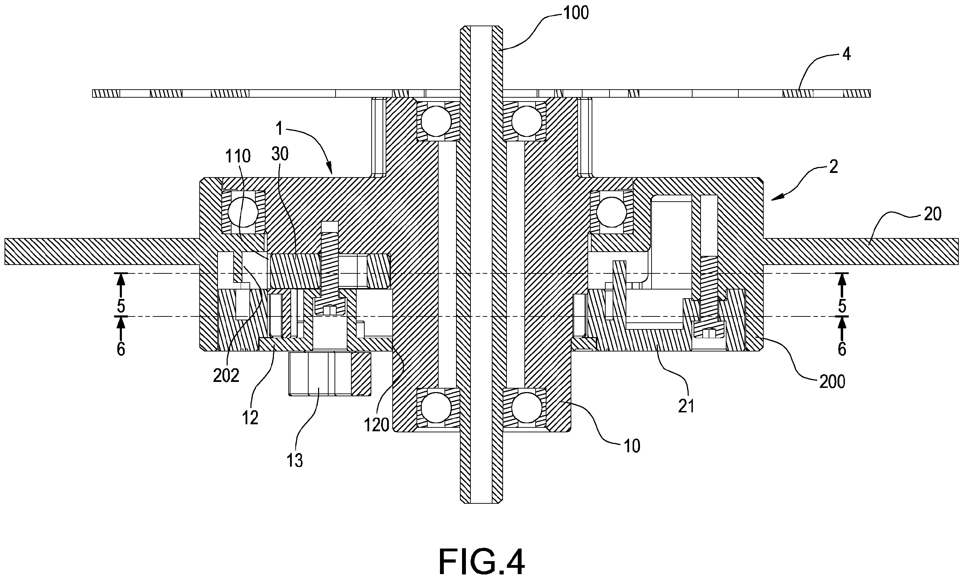

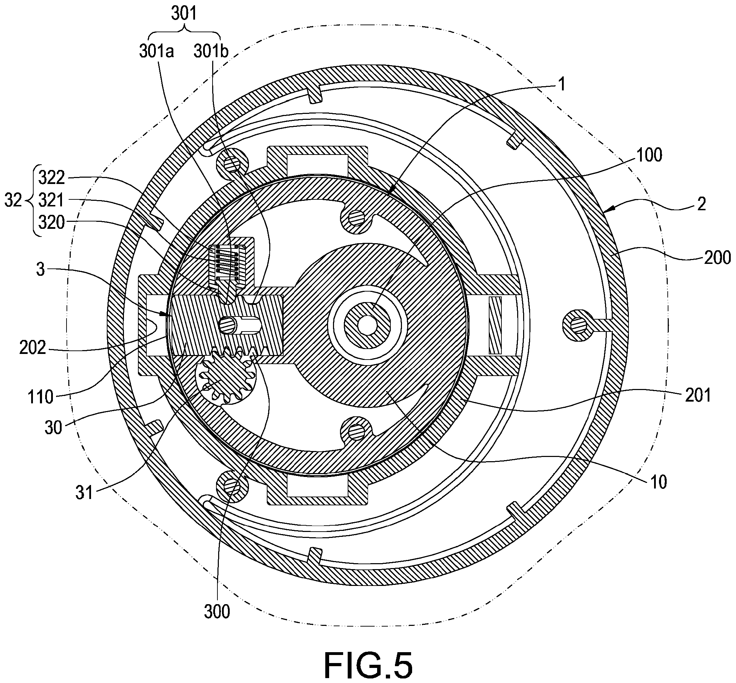

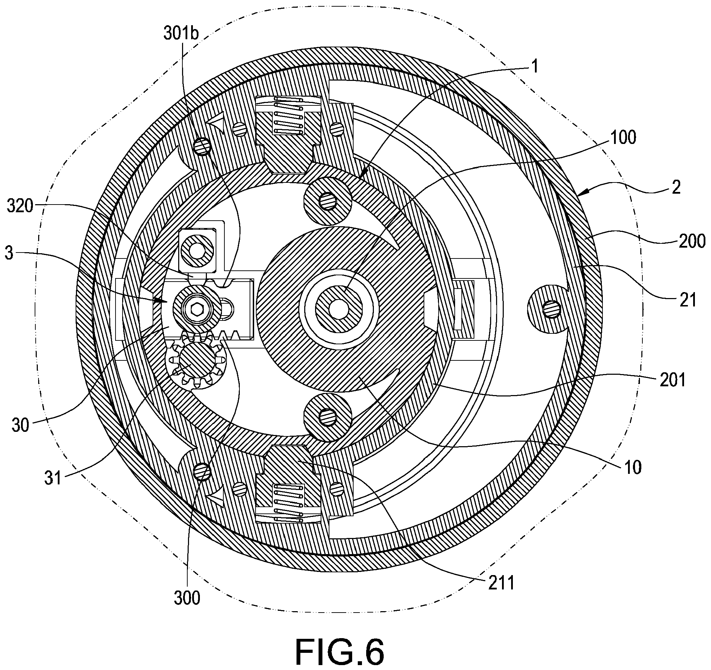

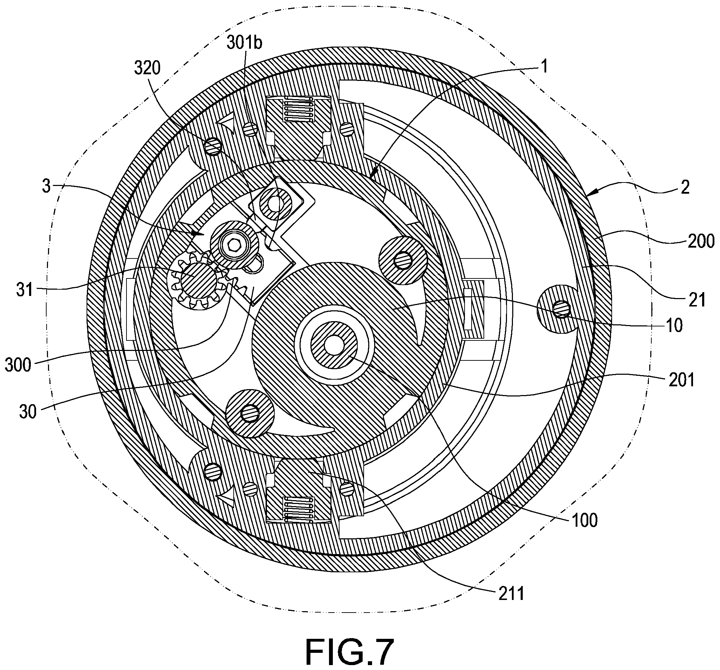

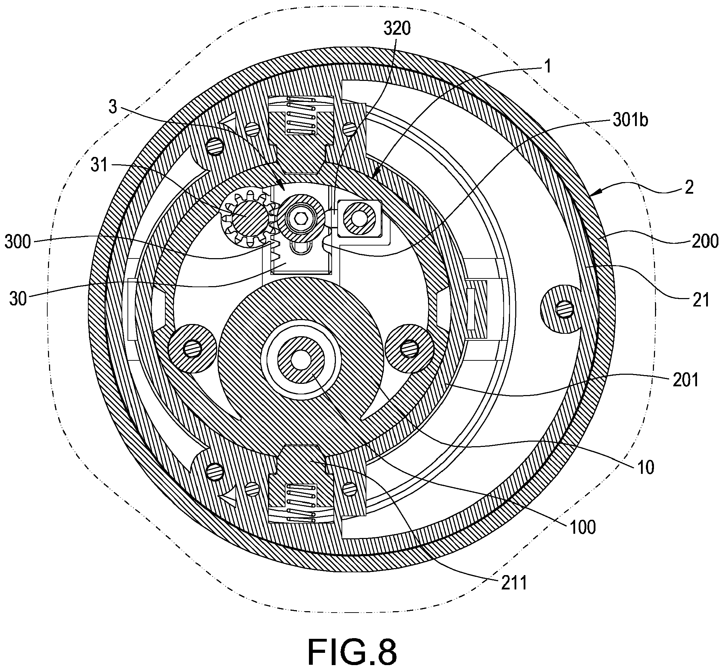

Thus, as shown in FIGS. 4-6, when adjusting the eccentricity, the release structure 3 needs to be in the releasing status first, that is, the disk seat 20 and the hub 1 may relatively rotate. At the same time, the switch member 31 may be wrenched by the wrench knob 13 to make the switch member 31 drive the teeth portion 300 of the limiting block 30 by the gear so as to shift the limiting block 30 to recede from the opening 110 to move back to the inner ring portion 11 as shown in FIG 5. At the same time, the adjustment disk 2 may be stopped by the brake disk 4 of the vehicle to make the adjustment disk 2 relatively rotate with the hub 1 as shown in FIGS. 6-8. After the axle portion 10 or the axle 100 is adjusted to a desired eccentric position, then the release structure 3 is used to limit the relative rotation of the disk set 20 and the hub 1 (that is, they cannot rotate against each other). In detail, during the process of the eccentricity adjustment, the invention may use both the positioning recesses 111 and the positioning protrusions 211 to provide a sensation of position adjustment, and its requirement of stages may be achieved by the amount of the positioning recesses 111/positioning protrusions 211, for example, the amount need to be increased when a finer-tuning of the eccentricity is needed.

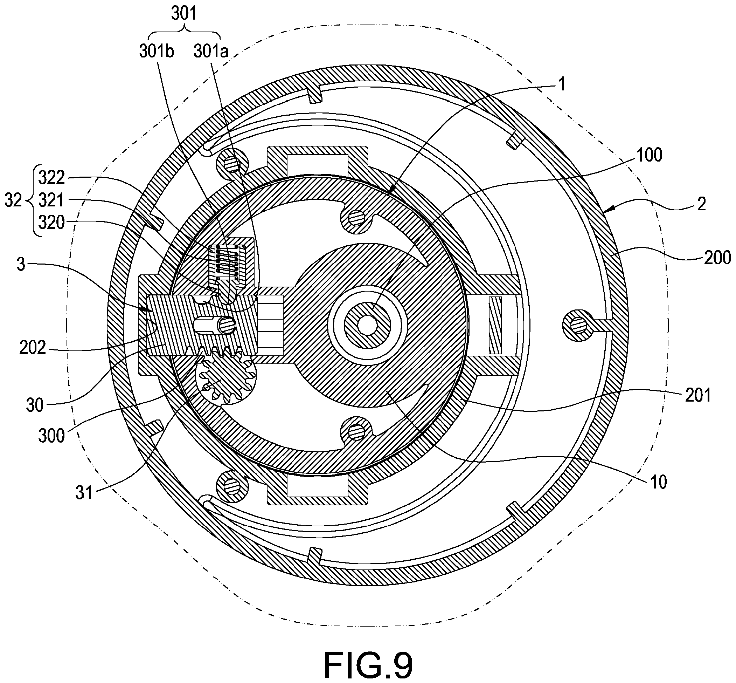

Next, as shown in FIG 9, after the desired eccentric position is reached, the release structure 3 needs to be in the limiting status, which means the disk seat 20 and the hub 1 cannot generate relative rotation. At the same time, the switch member 31 is wrenched by the wrench knob 13 again to make the switch member 31 drive the teeth portion 300 of the limiting block 30 by the gear so as to shift the limiting block 30 to protrude from the opening 110 to reach in the limiting hole 202 of the eccentric ring 201 to make the disk set 20 and the hub 1 synchronously rotate (that is, they cannot rotate against each other). This makes the vehicle drivable.

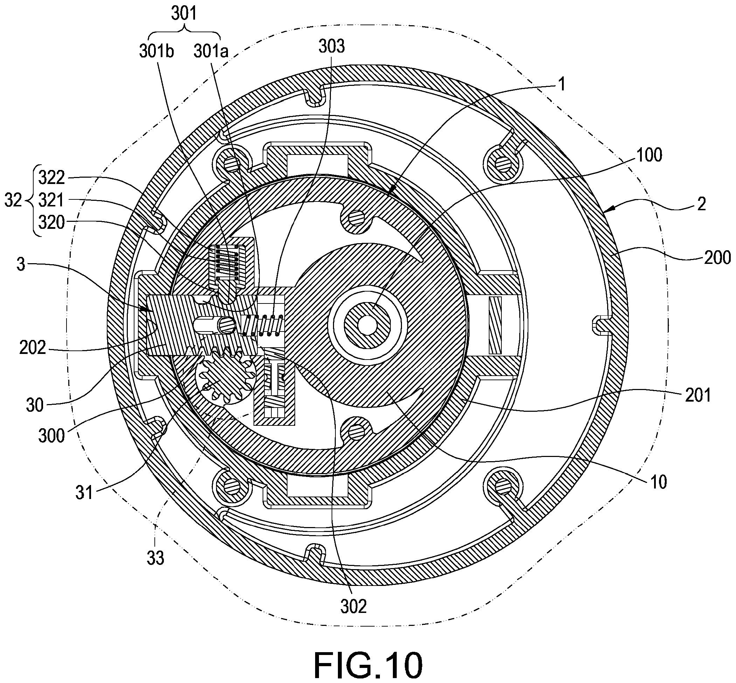

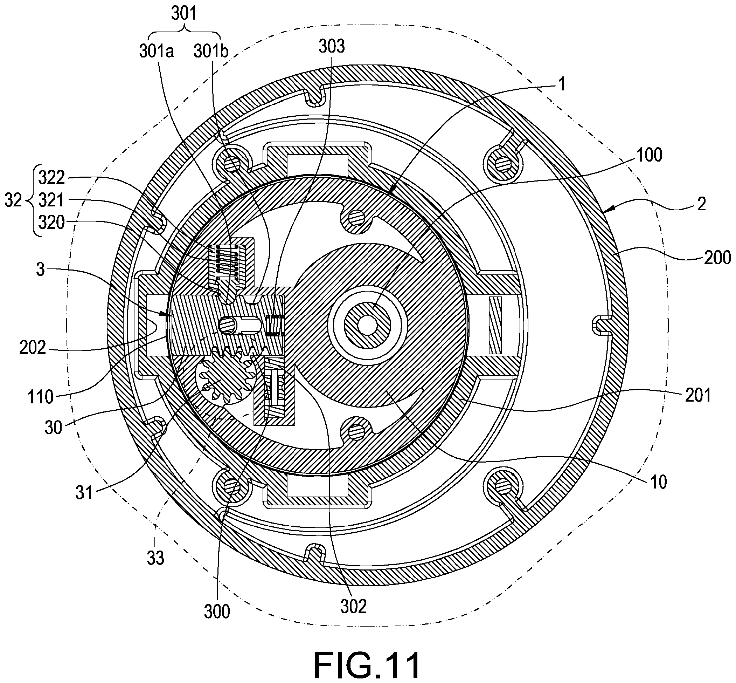

Further, as shown in FIG 10, in the second embodiment of the invention, a stopping element 302 may be additionally provided to prevent the release structure 3 from unexpectedly receding from the limiting status to the releasing status. The stopping element 302 may be disposed on a side of the rear end of the limiting block 30 and reaches the rear end after the limiting block 30 is in the limiting status to prevent the limiting block 302 from receding from the limiting hole 202. As shown in FIG 11, when adjusting the eccentricity, the stopping element 302 is receded from the side of the rear end of the limiting block 30 by wrenching or other operations to make the limiting block 30 recede from the limiting hole 202. In addition, a pushing element 303 may be additionally provided on the rear end of the limiting block 30. The pushing element 303 may be a spring to provide elasticity which pushes the limiting block 30 toward the limiting hole 202.

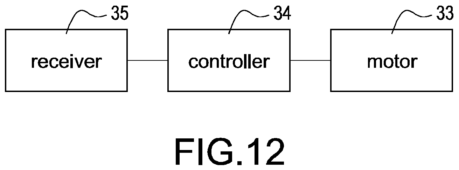

Moreover, in the abovementioned second embodiment, the switch member 31 may be driven by a motor 33. The motor 33 may be operated by a smartphone application or a remote control. As shown in FIG 12, the electric motor 33 is controlled by a controller 34. The controller 34 may be a circuit board (not shown in figures) disposed in the motor 33 or an external controller 34 which is electrically connected to a receiver 35 by which a signal from a smartphone application or a remote control is received to transfer the signal into a command to ask the motor 33 to drive or stop through the controller 34. This may guarantee the release structure 3 has to be released only by a digital operation to increase the safety.

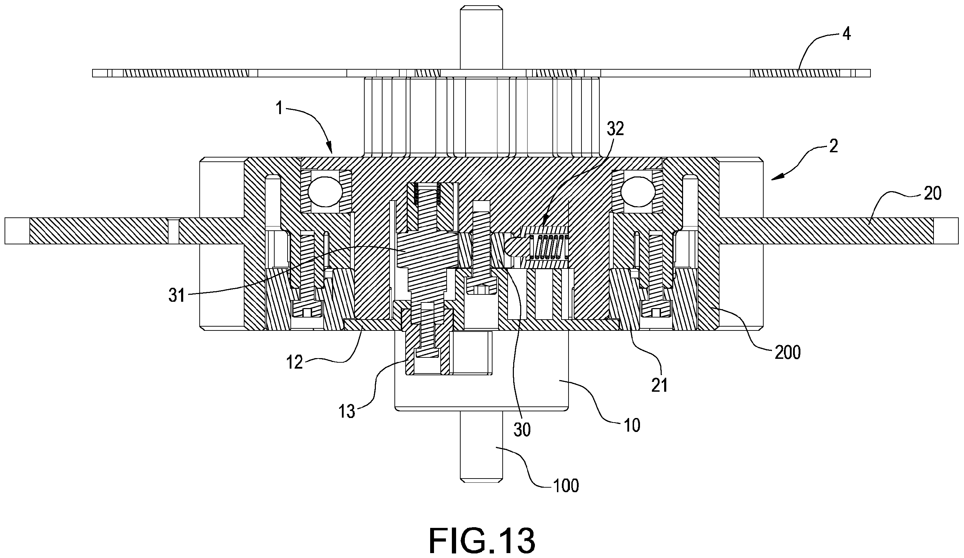

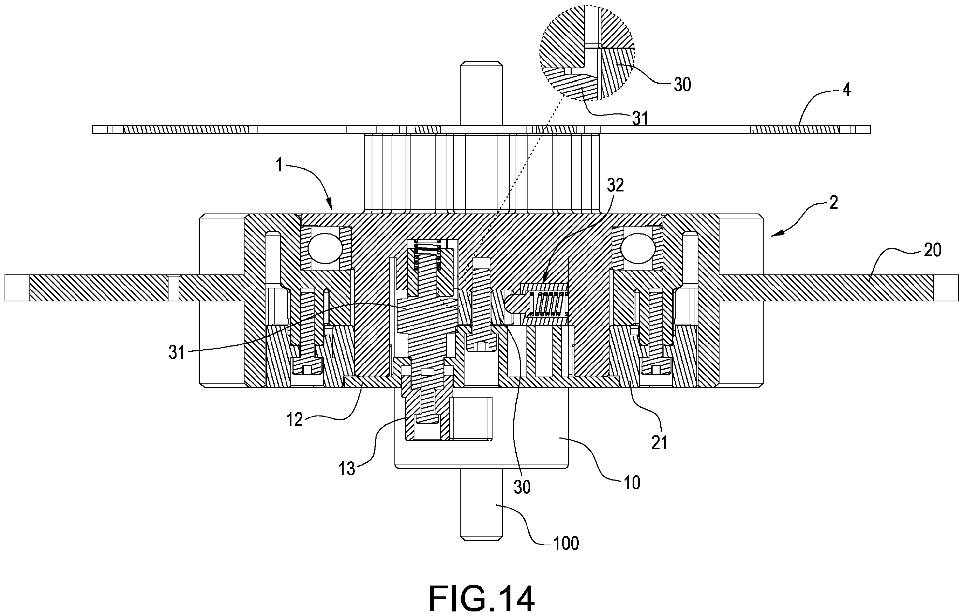

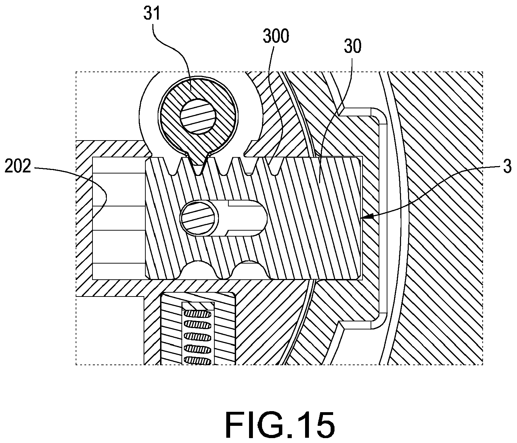

Furthermore, as shown in FIGS. 13 -15, the third embodiment of the invention may utilize the connection or disconnection between the limiting block 30 and the switch member 31 to prevent the release structure 3 from being unexpectedly released by itself due to accidental touch, that is, the switch member 31 may engage or disengage with the teeth portion 300 of the limiting block 30 through an axial displacement. In other words, after the switch member 31 is engaged with the teeth portion 300 by an axial displacement, it cannot rotate so as to prevent the switch member 31 from being driven by an accident wrench, which may cause the limiting block 30 to shift to become the releasing status and result in danger.

## Claims

1. An eccentric wheel adjustment device comprising:
a hub (1), comprising an axle portion (10) eccentrically arranged and an inner ring portion (11) disposed around the axle portion (10);
**characterized by**
an adjustment disk (2), comprising a disk seat (20) and a positioning member (21), the hub (1) pivotally disposed on the disk seat (20) and the positioning member (21) positioning the hub (1) on the disk seat (20), and the positioning member (21) comprising an outer ring portion (210) aligning the inner ring portion (11) of the hub (1) therein; and
a release structure (3), comprising a limiting block (30) and a switch member (31) driving the limiting block (30) to act,
wherein the switch member (31) is configured to drive the limiting block (30) to straddle between the hub (1) and the adjustment disk (2), or drive the limiting block (30) to move back to the inner ring portion (11).

2. The eccentric wheel adjustment device of claim 1, wherein the axle portion (10) comprises an axle (100) disposed therein.

3. The eccentric wheel adjustment device of claim 1, wherein the inner ring portion (11) comprises an opening (110), the limiting block (30) may pass the opening (110) to straddle between the hub (1) and the adjustment disk (2).

4. The eccentric wheel adjustment device of claim 3, wherein the disk seat (20) comprises a receiving portion (200), an eccentric ring (201) disposed in the receiving portion (200), the eccentric ring (201) comprises multiple limiting holes (202) annularly arranged at intervals and corresponding to the opening (110) of the hub (1), and the hub (1) is pivotally disposed in the receiving portion (200).

5. The eccentric wheel adjustment device of claim 3, wherein the inner ring portion (11) comprises multiple positioning recesses (111) annularly arranged at intervals, the outer ring portion (210) comprises multiple positioning protrusions (211) annularly arranged at intervals and separately corresponding to the positioning recesses (111).

6. The eccentric wheel adjustment device of claim 5, wherein the opening (110) and the positioning recesses (111) is offset along an axial direction of the inner ring portion (11).

7. The eccentric wheel adjustment device of claim 3, wherein the limiting block (30) comprises a teeth portion (300) disposed on a side thereof and extended toward the opening (110), the switch member (31) comprises a gear, and a wrench knob (13) is used to wrench the gear of the switch member (31) to rotate to drive the limiting block (30).

8. The eccentric wheel adjustment device of claim 1, wherein the hub (1) comprises a cover plate (12) covering the inner ring portion (11) to fix the release structure (3) in the inner ring portion (11).

9. The eccentric wheel adjustment device of claim 8, wherein the cover plate (12) comprises a pivot hole (120) corresponding to the axle portion (10).

10. The eccentric wheel adjustment device of claim 1, wherein the release structure (3) further comprises a stage assembly (32), the stage assembly (32) comprises a protrusive piece (320), an elastic element (321) abutting against the protrusive piece (320) and a receiving piece (322) accommodating the protrusive piece (320) and the elastic element (321), and the limiting block (30) comprises a two-stage structure (301) disposed thereon.

11. The eccentric wheel adjustment device of claim 1, further comprising: a stopping element (302) disposed on a side of a rear end of the limiting block (30).

12. The eccentric wheel adjustment device of claim 11, wherein the limiting block (30) comprises a pushing element (303) disposed on the rear end thereof.

13. The eccentric wheel adjustment device of claim 1, wherein the switch member (31) is driven by a wrench knob (13) or a motor (33).

14. The eccentric wheel adjustment device of claim 1, wherein the switch member (31) may engage or disengage with the limiting block (30) by an axial displacement.

15. The eccentric wheel adjustment device of claim 1, further comprising: a brake disk (4), assembled with the adjustment disk (2).

## Patentansprüche

1. Eine Exzenterrad-Einstellvorrichtung, die Folgendes umfasst:
eine Nabe (1), die einen exzentrisch angeordneten Achsenabschnitt (10) und einen um den Achsenabschnitt (10) herum angeordneten Innenringabschnitt (11) umfasst; **gekennzeichnet durch**
eine Einstellscheibe (2), die einen Scheibensitz (20) und ein Positionierungselement (21) umfasst, wobei die Nabe (1) schwenkbar auf dem Scheibensitz (20) angeordnet ist und das Positionierungselement (21) die Nabe (1) auf dem Scheibensitz (20) positioniert, und das Positionierungselement (21) einen äußeren Ringabschnitt (210) umfasst, der mit dem inneren Ringabschnitt (11) der Nabe (1) darin fluchtet; und
eine Auslösestruktur (3), die einen Begrenzungsblock (30) und ein Schaltelement (31) umfasst, das den Begrenzungsblock (30) in Bewegung setzt,
wobei das Schaltelement (31) so konfiguriert ist, dass es den Begrenzungsblock (30) so antreibt, dass er sich zwischen der Nabe (1) und der Einstellscheibe (2) spreizt, oder den Begrenzungsblock (30) so antreibt, dass er sich zurück zum Innenringteil (11) bewegt.

2. Die Exzenterrad-Einstellvorrichtung nach Anspruch 1, wobei der Achsenabschnitt (10) eine darin angeordnete Achse (100) umfasst.

3. Die Exzenterrad-Einstellvorrichtung nach Anspruch 1, wobei der innere Ringteil (11) eine Öffnung (110) aufweist und der Begrenzungsblock (30) die Öffnung (110) passieren kann, um zwischen der Nabe (1) und der Einstellscheibe (2) zu spreizen.

4. Die Exzenterrad-Einstellvorrichtung nach Anspruch 3, wobei der Scheibensitz (20) einen Aufnahmeabschnitt (200) und einen in dem Aufnahmeabschnitt (200) angeordneten Exzenterring (201) aufweist, der Exzenterring (201) mehrere Begrenzungslöcher (202) aufweist, die ringförmig in Abständen angeordnet sind und der Öffnung (110) der Nabe (1) entsprechen, und die Nabe (1) drehbar in dem Aufnahmeabschnitt (200) angeordnet ist.

5. Die Exzenterrad-Einstellvorrichtung nach Anspruch 3, wobei der innere Ringabschnitt (11) mehrere ringförmig in Abständen angeordnete Positionierungsaussparungen (111) aufweist und der äußere Ringabschnitt (210) mehrere ringförmig in Abständen angeordnete und den Positionierungsaussparungen (111) separat entsprechende Positionierungsvorsprünge (211) aufweist.

6. Die Exzenterrad-Einstellvorrichtung nach Anspruch 5, wobei die Öffnung (110) und die Positionierungsaussparungen (111) entlang einer axialen Richtung des Innenringabschnitts (11) versetzt sind.

7. Die Exzenterrad-Einstellvorrichtung nach Anspruch 3, wobei der Begrenzungsblock (30) einen Zahnabschnitt (300) aufweist, der an einer Seite desselben angeordnet ist und sich in Richtung der Öffnung (110) erstreckt, das Schaltelement (31) ein Zahnrad aufweist und ein Schlüsselknopf (13) verwendet wird, um das Zahnrad des Schaltelements (31) in Drehung zu versetzen, um den Begrenzungsblock (30) anzutreiben.

8. Die Exzenterrad-Einstellvorrichtung nach Anspruch 1, wobei die Nabe (1) eine Abdeckplatte (12) umfasst, die den inneren Ringabschnitt (11) abdeckt, um die Auslösestruktur (3) in dem inneren Ringabschnitt (11) zu fixieren.

9. Die Exzenterrad-Einstellvorrichtung nach Anspruch 8, wobei die Abdeckplatte (12) ein dem Achsabschnitt (10) entsprechendes Zapfenloch (120) aufweist.

10. Die Exzenterrad-Einstellvorrichtung nach Anspruch 1, wobei die Auslösestruktur (3) ferner eine Stufenbaugruppe (32) umfasst, wobei die Stufenbaugruppe (32) ein vorstehendes Teil (320), ein elastisches Element (321), das an dem vorstehenden Teil (320) anliegt, und ein Aufnahmeteil (322) umfasst, das das vorstehende Teil (320) und das elastische Element (321) aufnimmt, und wobei der Begrenzungsblock (30) eine darauf angeordnete zweistufige Struktur (301) umfasst.

11. Die Exzenterrad-Einstellvorrichtung nach Anspruch 1 umfasst ferner: ein Anschlagelement (302), das an einer Seite eines hinteren Endes des Begrenzungsblocks (30) angeordnet ist.

12. Die Exzenterrad-Einstellvorrichtung nach Anspruch 11, wobei der Begrenzungsblock (30) ein am hinteren Ende desselben angeordnetes Schiebeelement (303) aufweist.

13. Die Exzenterrad-Einstellvorrichtung nach Anspruch 1, wobei das Schaltelement (31) durch einen Schlüsselknopf (13) oder einen Motor (33) angetrieben wird.

14. Die Exzenterrad-Einstellvorrichtung nach Anspruch 1, wobei das Schaltelement (31) durch eine axiale Verschiebung mit dem Begrenzungsblock (30) in Eingriff oder außer Eingriff gebracht werden kann.

15. Die Exzenterrad-Einstellvorrichtung nach Anspruch 1 umfasst ferner: eine Bremsscheibe (4), die mit der Einstellscheibe (2) zusammengebaut ist.

## Revendications

1. Un dispositif de réglage à roue excentrique , comprenant
un moyeu (1) comprenant une partie d'axe (10) disposée de manière excentrique et une partie de bague intérieure (11) disposée autour de la partie d'axe (10) ;
**caractérisé par**
un disque de réglage (2) comprenant un siège de disque (20) et un élément de positionnement (21), le moyeu (1) étant disposé de manière pivotante sur le siège de disque (20) et l'élément de positionnement (21) positionnant le moyeu (1) sur le siège de disque (20), l'élément de positionnement (21) comprenant une partie annulaire extérieure (210) qui est alignée avec la partie annulaire intérieure (11) du moyeu (1) dans celui-ci ; et
une structure de déclenchement (3) qui comprend un bloc de limitation (30) et un élément de commutation (31) qui met en mouvement le bloc de limitation (30),
dans lequel l'élément de commutation (31) est configuré pour entraîner le bloc de limitation (30) pour qu'il s'écarte entre le moyeu (1) et le disque de réglage (2), ou pour entraîner le bloc de limitation (30) pour qu'il se déplace en arrière vers la partie de bague intérieure (11).

2. Le dispositif de réglage à laroue excentrique selon la revendication 1, dans lequel la section d'axe (10) comprend un axe (100) disposé à l'intérieur.

3. Le dispositif de réglage à roue excentrique selon la revendication 1, dans lequel la partie annulaire intérieure (11) présente une ouverture (110) et le bloc de limitation (30) peut passer par l'ouverture (110) pour s'écarter entre le moyeu (1) et le disque de réglage (2).

4. Le dispositif de réglage à roue excentrique selon la revendication 3, dans lequel le siège de disque (20) comprend une partie de réception (200) et une bague excentrique (201) disposée dans la partie de réception (200), la bague excentrique (201) comprend une pluralité de trous de limitation (202) espacés de manière annulaire et correspondant à l'ouverture (110) du moyeu (1), et le moyeu (1) est disposé de manière rotative dans la partie de réception (200).

5. Le dispositif de réglage à roue excentrique selon la revendication 3, dans lequel la partie annulaire intérieure (11) comprend une pluralité d'évidements de positionnement (111) disposés de manière annulaire et espacée, et la partie annulaire extérieure (210) comprend une pluralité de saillies de positionnement (211) disposées de manière annulaire et espacée et correspondant séparément aux évidements de positionnement (111).

6. Le dispositif de réglage à roue excentrique selon la revendication 5, dans lequel l'ouverture (110) et les évidements de positionnement (111) sont décalés le long d'une direction axiale de la partie de bague intérieure (11).

7. Le dispositif de réglage à roue excentrique selon la revendication 3, dans lequel le bloc de limitation (30) comprend une partie dentée (300) disposée sur un côté de celui-ci et s'étendant vers l'ouverture (110), l'élément de commutation (31) comprend une roue dentée, et un bouton de clé (13) est utilisé pour faire tourner la roue dentée de l'élément de commutation (31) afin d'entra ner le bloc de limitation (30).

8. Le dispositif de réglage à roue excentrique selon la revendication 1, dans lequel le moyeu (1) comprend une plaque de recouvrement (12) qui recouvre la partie annulaire intérieure (11) pour fixer la structure de déclenchement (3) dans la partie annulaire intérieure (11).

9. Le dispositif de réglage à roue excentrique selon la revendication 8, dans lequel la plaque de recouvrement (12) présente une mortaise (120) correspondant à la section d'axe (10).

10. Le dispositif de réglage à roue excentrique selon la revendication 1, dans lequel la structure de déclenchement (3) comprend en outre un ensemble de gradins (32), dans lequel l'ensemble de gradins (32) comprend une partie saillante (320), un élément élastique (321) qui vient en butée contre la partie saillante (320), et une partie de réception (322) qui reçoit la partie saillante (320) et l'élément élastique (321), et dans lequel le bloc de limitation (30) comprend une structure à deux gradins (301) disposée sur celui-ci.

11. Le dispositif de réglage à roue excentrique selon la revendication 1 comprend en outre : un élément de butée (302) disposé sur un côté d'une extrémité arrière du bloc de limitation (30).

12. Le dispositif de réglage à roue excentrique selon la revendication 11, dans lequel le bloc de limitation (30) comprend un élément coulissant (303) disposé à l'extrémité arrière de celui-ci.

13. Le dispositif de réglage à roue excentrique selon la revendication 1, dans lequel l'élément de commutation (31) est entraîné par un bouton à clé (13) ou un moteur (33).

14. Le dispositif de réglage à roue excentrique selon la revendication 1, dans lequel l'élément de commutation (31) peut être mis en prise ou hors prise avec le bloc de limitation (30) par un déplacement axial.

15. Le dispositif de réglage à roue excentrique selon la revendication 1 comprend en outre : un disque de frein (4) assemblé avec le disque de réglage (2).
